# EUROPEAN PATENT SPECIFICATION

(11) **EP 1 353 816 B1**
(45) Date of publication and mention of the grant of the patent: **15.11.2006**
(21) Application number: 02716515.8
(22) Date of filing: 24.01.2002
(51) Int. Cl.: B60J 1/10

(54) **METHOD FOR INSTALLING A FIXED WINDOW AND A FIXED WINDOW**
VERFAHREN ZUR INSTALLATION EINES FESTGELEGTEN FENSTERS UND EIN FESTGELEGTES FENSTER
PROCEDE D'INSTALLATION D'UNE FENETRE FIXE ET FENETRE FIXE

(30) Priority: 26.01.2001 SE 0100233
(43) Date of publication of application: 22.10.2003
(73) Proprietor: Bombardier Transportation GmbH, 13627 Berlin (DE)
(72) Inventor: SVENDING, Björn, S-394 77 Kalmar (SE); WEISS, Ulf, S-392 41 Kalmar (SE)
(74) Representative: Reyier, Ann-Mari
(86) International application number: PCT/SE2002/000126
(87) International publication number: WO 2002/058951

(56) References cited:
- EP-A1- 0 233 143
- EP-A2- 0 105 830
- EP-A2- 0 241 665
- US-A- 4 853 055

## Description

The present invention relates to a method for installing a fixed window and a fixed window. The invention is suited for windows of vehicles, especially windows of passenger carriages (US 4 853 055 A).

### BACKGROUND TO THE INVENTION

A vehicle window is described in EP 0 241 665 B1. This vehicle window has two-pane or multi-pane insulating glazing which is flush the outer skin and which is fixedly bonded by its inner part pane to an upstanding abutment surface, facing this in the edge region on the inside of the vehicle, of a stiff window frame profile which is arranged on the vehicle structure. For the mutual direct coupling, independent of the frame profile, between the partial panes of insulating glass an adhesive connection which bridges the pane interstice in the side edge region is formed in such an inherently stable manner that the loads acting on the outer part pane are transferable substantially without changing of the edge-side pane spacing by way of the adhesive connection to the inner part pane and by way of this to the frame profile.

Another vehicle window, more especially a side window of passenger carriages, is described in EP 0 102 526 B1. The windowpane of the vehicle window is arranged fixedly in the form of a double or multiple panes in a profiled window frame by way of adhesive layers. The window has at least one outer pane that is larger or smaller relative the inner part, at least for the two longer window sides. The window frame has a profile, which is step-shaped in cross-section and which has corresponding stop and adhesion surfaces spatially offset to one another for the inner or respectively outer surfaces of the inner and outer pane or respectively of the several partial panes of a multiple pane.

A further vehicle window is described in EP 0 105 830 B1. The windowpane is in the form of a double or multiple panes fixedly disposed in a profiled window frame by means of layers of adhesive. The window frame has at least at the two, upper and lower, longitudinal sides of the window a profile which is U-shaped in cross-section and the mutually opposite inner surfaces of which are both stop and adhesion surfaces of the window pane, in which respect the U-limb associated with the outer pane is an integral extension of the vehicle wall.

The US 4,853,055 describes a flush glass installation process. In this method for adhesive installing a fixed window to vehicle body structure which defines a window opening and a through around the periphery of the opening for receiving adjacent edge portions of the window comprising five steps. First a tape having an inner portion with an adhesive on one side, an outer portion with an adhesive on one side and a midportion having a multiplicity of perforations and a parting agent on one side located between the inner and outer portions is provided. Second the inner portion of said tape is adhesively securing to the outer edge portions of the window and with the perforated inner portion and outer portion overhanging said outer edge portions of the window. Also a second adhesive tape is adhesively securing to the body structure around said through. Third uncured adhesive material, which is adherent to glass and metal, is placed in the through. Fourth said window is positioning in said through and against said adhesive material. The outer portion of said tape is pressing against said second tape and with said perforated midportion allowing entrapped air and any excess adhesive material to pass through upon the window being fully positioned in said through. Fifth said first tape is removing and then said second tape after said adhesive material cures whereby said window glass is adhesively secured to said through and is flush with adjacent portions of said vehicle body structure.

Today windows are mounted with rubber sealant or with soft glue. Examples of soft glue are polyurethane, rubber, silicone or MS polymer with low modulus of elasticity. It is applied as a rather thick joint (5-10 mm). There is a difference between a joint of glue and a rubber sealant. The purpose of the glued joint is to fixate the glass to the car body and it must bear the pressure loads and accelerations that affect the glass. The rubber sealant works as an outer barrier against humidity, and to seal and bond the car body and the glass. Glued windows often have a rubber sealant.

The mounting of a rubber sealant demand, if standard windows are used, a moulding that extend beyond car body and glass. The glass and the moulding are often not flush the car body, which is a source to sound and could be considered unattractive. As the seal against humidity is obtained only by the moulding's pressure against the window, there are often problems with leaks of water and dampness. The rubber sealant is often designed with a tear-off part that is mounted in the glass panel to fixate the glass. When changing the glass the tear off part is dismounted first. Often the windows mounted with rubber sealant have poor strength in the bond and could even be kicked out by vandals.

Windows can be mounted flush to the car body with a rubber sealant, but this demand glass with very accurate tolerances and is therefor more expensive.
A glued window where the supporting glue joint is applied to the inside of the outer or the inner glass demand a rubber sealant on the outside and a very good fit of the interior to the inner window. The interior panel has to be shaped in three-dimensional shapes to fit to the window, or a moulding has to be used. The mounting of the rubber sealant take the greater part of the time for mounting a window and the connection to the interior demand a separate moulding or a three dimensional shape to the interior panel.

### SUMMARY OF THE INVENTION

It is one object of the invention to provide a simple method for installing a fixed window in a vehicle carbody which demand few operations. Another object is to provide a fixed window, especially a window which is flush the carbody, that is easy to install and to dismount and that is very well sealed to the carbody so as not to have problems with leaks of water or dampness.

These objects are accomplished by a method for installing a fixed window possessing the features of claim 1 and a fixed window possessing the features of claim 6. Advantageous modifications and embodiments ensue from the further claims.

The invention involves gluing the edges of the glass and the outer surface of the intermediate distance moulding with glue. Because of the position of the joint the glue can simultaneously serve as a rubber sealant, glue joint and connection to the interior. Preferably the glue is positioned between car body and window, more especially in the complete space defined by the edges of the window, the edges of the opening in the carbody and the extended inner and outer surfaces of the window. The glue is injected or vacuum injected in one single operation, after attaching a glue fixture on the inside and outside of the joint, tightly sealed against the inner and outer surfaces of the window and car body.

The process will be following described: The window, having two or more panes separated by distance mouldings, is temporarily fixed to the car body. The temporary fixation is achieved by wedging the window to the car body or by aid of the gluing fixture. The gluing fixture is attached to both sides of the window in such a way that it is tightly sealed to the surfaces of the window and car body close to the joint. The fixture is made of a material with low adhesion to the glue, such as Teflon or polythene, or a protective film of such material is provided between the joint and the fixture.

The glue is injected into the space between window, car body and gluing fixture. The injection can be aided by vacuum. If there is a protective film the fixture can be removed as soon as the space is filled with glue, otherwise the glue has to cure.

The glue used can be soft glue, such as polyurethane, silicon, butyl rubber or MS polymer with low modulus of elasticity (typically 25 MPa), or stiff glue such as epoxy (E-modulus typically 2500 MPa). The use of stiff glue enables structural glazing that gives a significant increase in carbody strength or gives a possibility to reduce weight. Structural glazing demand glass that can withstand loads on the edges or loads introduced as shearing loads via the moulding.

### BRIEF DESCRIPTION OF THE DRAWINGS

Fig. 1 shows a car body wall with a window (prior art),
Fig. 2 shows another car body wall with a window (prior art) and
Fig. 3 and 4 show a car body with a window and a glued joint according to the invention.
Fig. 5 and 6 show a gluing fixture that can be used to implement the invention.

### DETAILED DESCRIPTION OF PREFERED EMBODIMENTS

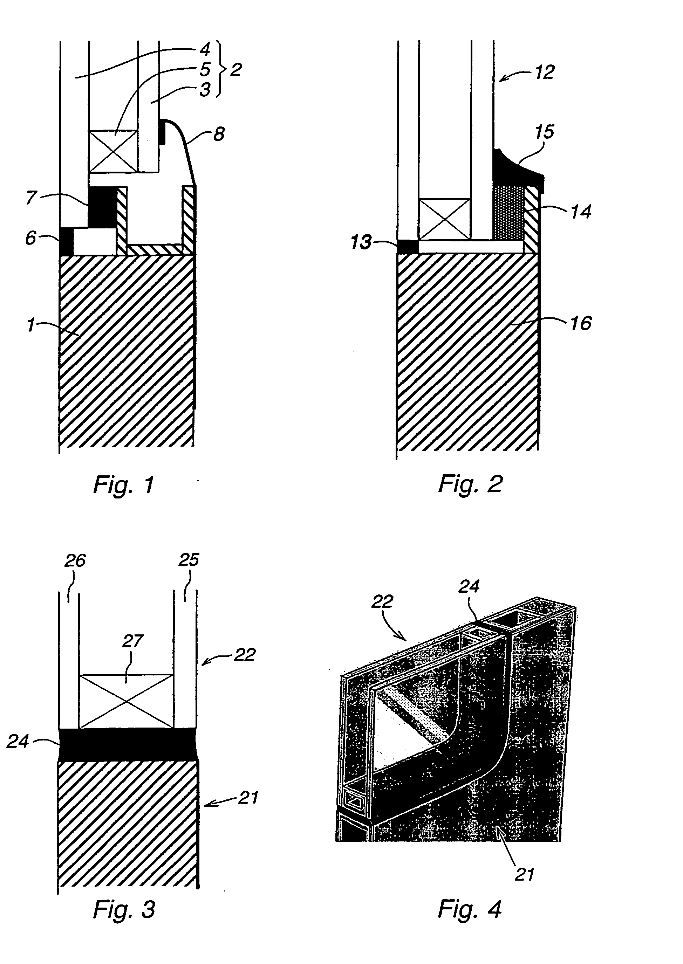

Figure 1 shows a conventional car body wall **1** with a window **2** with an inner **3** and an outer pane **4** and an intermediate distance moulding **5** mounted to the car body by both a rubber sealant **6** and glue **7.** The interior **panel 8** is shaped in a three dimensional shape to fit to the window **2.**
Figure 2 shows another conventional car body wall **11** with a window **12** mounted to the car body **16** by a rubber sealant **13** and glue **14** and an inner moulding **15.**
Figure 3 shows a car body **21** with a window **22** and a glued joint **24.** The invention involves gluing the edges of the glass of the window **22** and the outer surface of the intermediate distance moulding with soft glue. Because of the position of the glued joint **24** the glue can simultaneously serve as a rubber sealant, glue joint and connection to the interior. The glued joint **24** is made in one single operation. The window **22,** having in this example two panes **25, 26** separated by a distance moulding **27,** is temporarily fixed to the car body **21.** The temporary fixation is achieved by wedging the window **22** to the car body **21** or by aid of a gluing fixture. The gluing fixture is attached to both sides of the window **22** in such a way that it is tightly sealed to the surfaces of the window **22** and car body **21** close to the glued joint **24.** The part of the gluing fixture that seal the joint space is made of a material with low adhesion to the glue, such as polytetrafluorethylene or polythene, or a protective film of such material is provided between the gluing joint **24** and the gluing fixture.

The glue is injected into the space between window **22,** car body **21** and gluing fixture. The injection can be aided by vacuum.

If there is a protective film the gluing fixture can be removed as soon as the space is filled with glue, otherwise the glue has to cure.

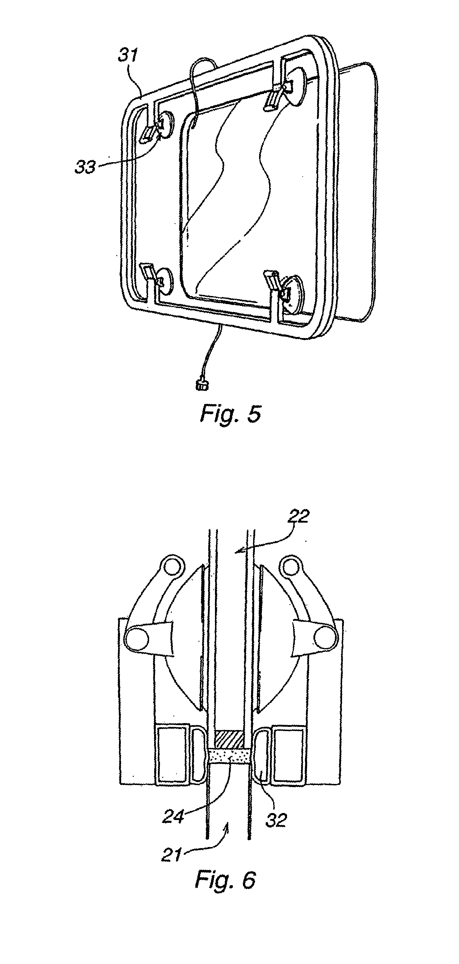

A gluing fixture could have a construction as shown in fig. 5 and 6. A seal **32** with low adhesion to the glue close the joint space **24.** The seal is mounted on a frame **31** that is attached to the carbody wall and window by the seal and fastening means **33.**

The glued joint of the invention could also be used for conventional car bodies, as shown in fig. 1 and 2, by filling the entire space between car body and window with glue according to the described method. The gluing fixture used for these window constructions could be similar to the one shown in fig 5 and 6 except that the inner frame should be smaller than the outer frame. The single operation saves man-hours and lead-time. The windows are more easily disassembled than with prior art techniques and the joint will be more effective in bearing loads and sealing. The best result however is achieved with a thin walled car body where the window can be mounted flush the inside and the outside of the car body wall. The invention is advantageous used on vehicles of modular construction, where windows are assembled in wall elements, since such wall elements can be lying down during the assembly.

## Claims

1. Method for fixing a window in an opening in a vehicle wall comprising the steps of
a) temporarily fixating the window (22) in an opening in the carbody wall (21), thus forming a joint space between the edge of the window and the edge of the opening in the vehicle wall
b) filling the joint space with glue thus forming a glue joint (24),
c) allowing the glue to cure.

2. Method according to any of the claims 1 wherein the temporary fixation is achieved by aid of a gluing fixture and the step a) includes attaching the gluing fixture on the inside and/or outside of the joint space (24), tightly sealed against surfaces of the window (22) and car body (21) and the step c) include removing the gluing fixture.

3. Method according to claim 2 wherein the glue is injected or vacuum injected, more especially in one single operation.

4. Method according to claim 2 or 3 wherein the part of the gluing fixture that has contact with the glue comprise a material with low adhesion to the glue, such as polytetrafluorethylene or polythene, or a protective film of such material is provided between the glued joint (24) and the gluing fixture.

5. Method according to any of the claims 2-4, wherein if there is a protective film, the gluing fixture can be removed as soon as the space is filled with glue, otherwise the glue has to cure.

6. Fixed window for use in a vehicle that a glue is positioned between edges of an opening in a vehicle wall (21) and edges of a window (22) forming a glued joint (24) **characterized in that** the glued joint is positioned in such a way that it simultaneously serve as a rubber sealant, glue joint and connection to the interior and the glued joint (24) is flush with the car body on the inside.

7. Fixed window according to claim 6, wherein the glue is stiff e.g. epoxy.

8. Fixed window according to claim 6, wherein the glue is soft as for example polyurethane, rubber, silicone rubber or MS polymer.

9. Fixed window according to any of the claims 6-8 wherein the glued joint (24) has a thickness of 4-10 mm, preferably 6 mm.

10. Fixed window according to any of the claims 6-9, wherein the window (22) and the glued joint (24) is flush the carbody (21) on at least the outside.

## Patentansprüche

1. Verfahren zum Befestigen eines Fensters in einer Öffnung in einer Fahrzeugwand, umfassend die Schritte:
a) temporäres Befestigen des Fensters (22) in einer Öffnung in der Fahrzeugkarosseriewand (21), so dass ein Verbindungsraum zwischen dem Rand des Fensters und dem Rand der Öffnung in der Fahrzeugwand gebildet wird,
b) Füllen des Verbindungsraums mit Klebstoff, so dass eine Klebstoffverbindung (24) gebildet wird,
c) Aushärtenlassen des Klebstoffes.

2. Verfahren nach Anspruch 1, wobei die temporäre Befestigung mithilfe einer Klebehalterung erreicht wird und Schritt a) das Befestigen der Klebehalterung an der Innenseite und/oder Außenseite des Verbindungsraumes (24) dicht an den Oberflächen des Fensters (22) und der Fahrzeugkarosserie (21) anliegend umfasst und Schritt c) das Entfernen der Klebehalterung umfasst.

3. Verfahren nach Anspruch 2, wobei der Klebstoff eingespritzt oder unter Vakuum eingespritzt wird, insbesondere in einem einzigen Arbeitsgang.

4. Verfahren nach Anspruch 2 oder 3, wobei der Teil der Klebehalterung, der mit dem Klebstoff in Berührung kommt, ein Material mit geringer Haftung an dem Klebstoff umfasst, wie zum Beispiel Polytetrafluorethylen oder Polyethylen, oder einen Schutzfilm aus einem derartigen Material, der zwischen der Klebstoffverbindung (24) und der Klebehalterung vorgesehen ist.

5. Verfahren nach einem der Ansprüche 2-4, wobei dann, wenn ein Schutzfilm vorhanden ist, die Klebehalterung entfernt werden kann, sobald der Raum mit Klebstoff gefüllt ist, während andernfalls der Klebstoff aushärten muss.

6. Feststehendes Fenster zur Verwendung in einem Fahrzeug, bei dem ein Klebstoff zwischen Rändern einer Öffnung in einer Fahrzeugwand (21) und Rändern eines Fensters (22) positioniert ist, der eine Klebstoffverbindung (24) bildet, **dadurch gekennzeichnet, dass** die Klebstoffverbindung so positioniert ist, dass sie gleichzeitig als eine Gummidichtung, Klebstoffverbindung und Verbindung mit dem Inneren dient und die Klebstoffverbindung(24) bündig mit der Innenseite der Fahrzeugkarosserie ist.

7. Feststehendes Fenster nach Anspruch 6, wobei der Klebstoff steif ist, zum Beispiel Epoxy.

8. Feststehendes Fenster nach Anspruch 6, wobei der Klebstoff weich ist, wie zum Beispiel Polyurethan, Gummi, Silicongummi oder MS-Polymer.

9. Feststehendes Fenster nach einem der Ansprüche 6-8, wobei die Klebstoffverbindung(24) eine Dicke von 4-10 mm hat, vorzugsweise 6 mm.

10. Feststehendes Fenster nach einem der Ansprüche 6-9, wobei das Fenster (22) und die Klebstoffverbindung(24) mindestens an der Außenseite bündig mit der Fahrzeugkarosserie (21) sind.

## Revendications

1. Procédé pour fixer une glace dans une ouverture dans une paroi d'un véhicule comprenant les étapes de :
a) fixation temporaire de la glace (22) dans une ouverture dans la paroi de la caisse (21), formant ainsi un espace entre le bord de la glace et le bord de l'ouverture dans la paroi du véhicule,
b) remplissage de l'espace avec de la colle formant ainsi un joint de colle (24),
c) réticulation de la colle.

2. Procédé selon la revendication 1 dans lequel la fixation temporaire est réalisée à l'aide d'un dispositif à coller et l'étape a) comprenant la fixation du dispositif à coller sur l'intérieur et/ou l'extérieur de l'espace (24), scellé fortement contre les surfaces de la glace (22) et de la caisse (21) et l'étape c) comprend l'élimination du dispositif à coller.

3. Procédé selon la revendication 2 dans lequel la colle est injectée ou injectée sous vide, en particulier en une seule opération.

4. Procédé selon la revendication 2 ou 3 dans lequel la partie du dispositif à coller qui est en contact avec la colle comprend un matériau présentant une adhésion faible à la colle, de sorte que du polytétrafluoroéthylène ou du polyéthylène, ou un film protecteur d'un tel matériau est disposé entre le joint collé (24) et le dispositif à coller.

5. Procédé selon l'une quelconque des revendications 2 à 4, dans lequel en présence d'un film protecteur, le dispositif à coller peut être éliminé dès que l'espace est rempli de colle, sinon la colle doit être réticulée.

6. Glace fixe pour l'utilisation dans un véhicule avec une colle située entre les bords d'une ouverture dans une paroi de véhicule (21) et les bords d'une glace (22) formant un joint collé (24) **caractérisée en ce que** le joint collé est situé de sorte qu'il sert simultanément d'enduit d'étanchéité de caoutchouc, de joint de colle et de connexion à l'intérieur et le joint collé (24) est encastré à la caisse sur l'intérieur.

7. Glace fixe selon la revendication 6, dans laquelle la colle est rigide par exemple de l'époxy.

8. Glace fixe selon la revendication 6, dans laquelle la colle est molle par exemple le polyuréthane, le caoutchouc, le caoutchouc de silicone ou un polymère MS.

9. Glace fixe selon l'une quelconque des revendications 6 à 8 dans laquelle le joint collé (24) présente une épaisseur de 4 à 10 mm, de préférence 6 mm.

10. Glace fixe selon l'une quelconque des revendications 6 à 9, dans laquelle la glace (22) et le joint collé (24) est encastré à la caisse (21) sur au moins l'extérieur.
